# EUROPEAN PATENT APPLICATION

(11) **EP 1 854 653 A1**
(43) Date of publication of application: **14.11.2007**
(21) Application number: 06090071.9
(22) Date of filing: 08.05.2006
(51) Int. Cl.: B60K 15/04

(54) **Capless fuel tanking system**

(71) Applicant: Teknia Manufacturing Group, 48230 Elorrio (ES)
(72) Inventor: Peña Hernandez, Jose Miguel, 48200 Elorrio (ES)

(57) **Abstract**

Basically the present system is a capless fuel tanking system which has latches (11) to restrict the insertion of unintended nozzles, a flapper door (14) with a gaged metallic spring to ensure the sealing and a bidirectional venting valve (6) to maintain the functionality and reduce the volume and the weigh of the complete system.
Upon insertion of the correct fuel nozzle, the nozzle touches the latches (11) and causes them to release the flapper door (14) to allow its opening.

## Description

### 1. Field of the invention.

The present invention is related to a fuel filler neck closure assembly for light trucks and passengers cars.

### 2. Description of related art.

To start with, the fuel filler neck assembly could be defined as the group of elements which communicate the fuel tank with the environment out of the vehicle. This fuel filler neck assembly consists of a group of pipes (usually two or three) which contain some elements in order to reach some features.

These features mainly are:
- To allow the refuelling: obviously the users will need to fill their fuel tank during the shelf life of the vehicle.
- To keep sealed the system: the fuel tank has to be sealed to prevent fuel emanations and leaks.
- To allow to take/emit air from outside in order to maintain the pressure in the fuel tank in a predetermined range of values.

Usually, a removable cap with a sealing rubber o-ring is used to close the open head of the fuel filler neck assembly. The cap is mounted in a part which seems to be a funnel located in the filler neck called retainer. This cap is removed to allow the refuelling operation, and then, the nozzle is inserted into the retainer in order to fill the fuel tank.

Nowadays there are two types of retainers, that is, one for diesel and one for petrol. The difference from diesel to petrol is the size of the hole where the user inserts the nozzle, the diameter of the diesel hole is larger than the petrol one.

This fact forces to be two types of nozzle: for petrol and diesel. These two nozzles are similar, the difference is the size of the diameter. Obviously, the size of the petrol nozzle is smaller than the diesel one.

This feature is used as a preventive measure, the user cannot insert the diesel nozzle into petrol retainer but will be able to put the petrol nozzle into the diesel car.

As we can imagine if the second action is carried out the damage in the vehicle will be important.

The sealing of the system is carried out by the rubber o-ring on the cap, When the user finishes the refuelling operation puts the cap onto the retainer turning it to ensure the shutting. With this action the cap exerts a pressure on the o-ring which is sited between the pressure area of the cap and the retainer.

On the other hand the controlled admission/emission of air is allowed, that is, when the pressure decreases too much in the fuel tank the systems takes air from outside to compensate it and in case of emergency when the pressure in the tank increases suddenly and there is a risk of explosion emits fuel vapours to outside.

This admission/emission is controlled by two valves or a bidirectional valve sited in the cap.

Taking into account all of this facts we can see that there is a technical gap in the functionality of fuel systems. Firstly, the system does not restrict the access of unintended nozzles; secondly, if the user does not turn the cap with the suitable torque will be a failure in the sealing of the system.

At this moment there is only a car in the market which has a capless fuel system but the functionality is the same as mentioned previously, except for the sealing of the system, the sealing is made by a flapper valve which is driven by a gaged metallic spring.

Companies started working some years ago to face this issue (the restriction of unintended nozzles) but the found solution is to implant a system which includes a little electric motor which opens and closes the capless fuel system when the user needs to refuel his/her car.

As we can assume this solution is really expensive so the automotive industry is averse to change their current systems.

As well as being more expensive, those electric systems are bigger than current ones so their size and weigh are larger.

Apart from above mentioned questions there also is another big issue. In Europe plastic fuel filler necks and metallic fuel filler necks are used, on the other hand only metallic necks are used in United States so in several cases OEMs are forced to duplicate their tooling to adapt the retainer or capless system to both solutions.

### 3. Summary of the present invention.

The present invention has been developed in order to reduce the production cost and maintain as far as possible the current size and weigh and of course, to give a solution to above mentioned problems.

Basically the present system is a capless fuel system which have some devices to restrict the insertion of unintended nozzles, a flapper door set with a gaged metallic spring to ensure the sealing and a bidirectional valve to maintain the functionality and reduce the volume and the weigh of the complete system.

### 4. Brief descriptions of the drawings.

To have a better understanding of the present invention is recommendable to read the detailed description and see the corresponding drawing in conjunction.
Fig 1: It is a side of the vehicle showing fuel filling system.
Fig 2: It is a fuel filler head having mounted the capless fuel system of the present invention.
Fig 3: Front and Top views of the present invention.
Fig 4: Sections of the present capless fuel system showing the components.
Fig 5: An isometric view of the flapper door of the capless fuel system.

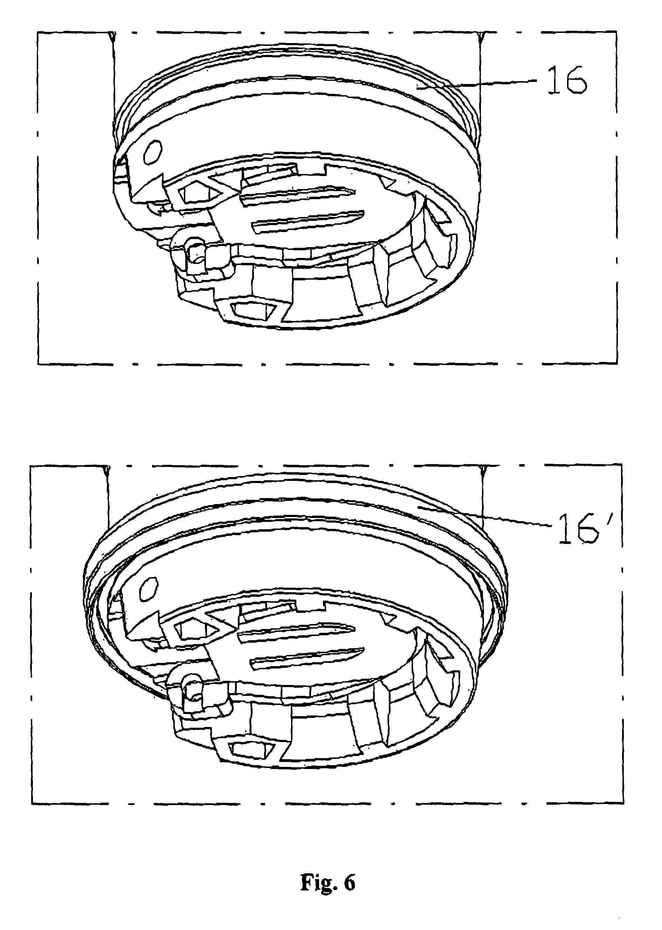

Fig 6: Views showing the joint method for different options: plastic or metallic filler pipes.
Fig 7: Views showing the operating method of the locking system.
Fig 8: Views showing the operating method of the safety valve.

### 5. Detailed description of a preferred embodiment of the present invention.

The present invention has been developed in order to reduce the production cost and maintain as far as possible the current size and weigh and of course, to overcome all of the above-mentioned disadvantages of the previously mentioned devices.

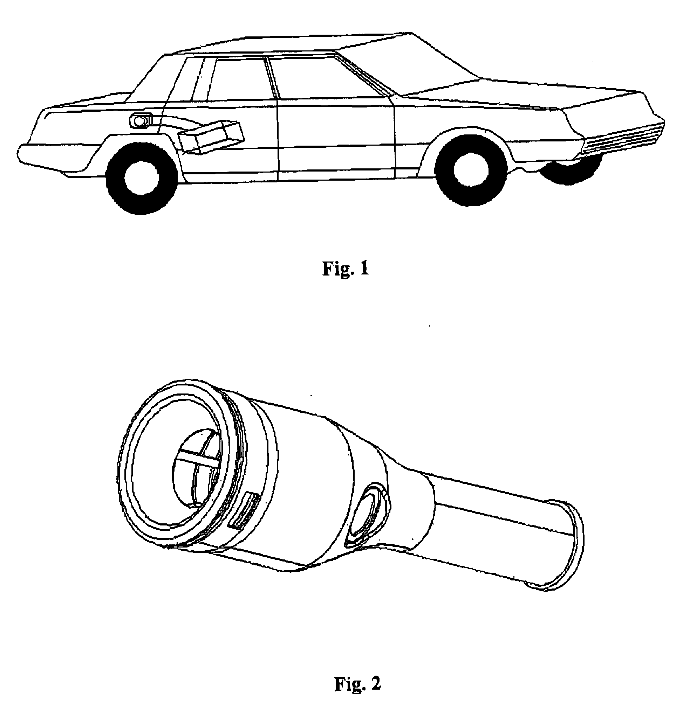

With reference to Fig 1, a conventional fuel filling system is shown, as you can see the system mainly consist in a fuel tank wherein the fuel is stored and a pipe called fuel filler which communicates the fuel tank with the exterior in order to allow the refuelling.

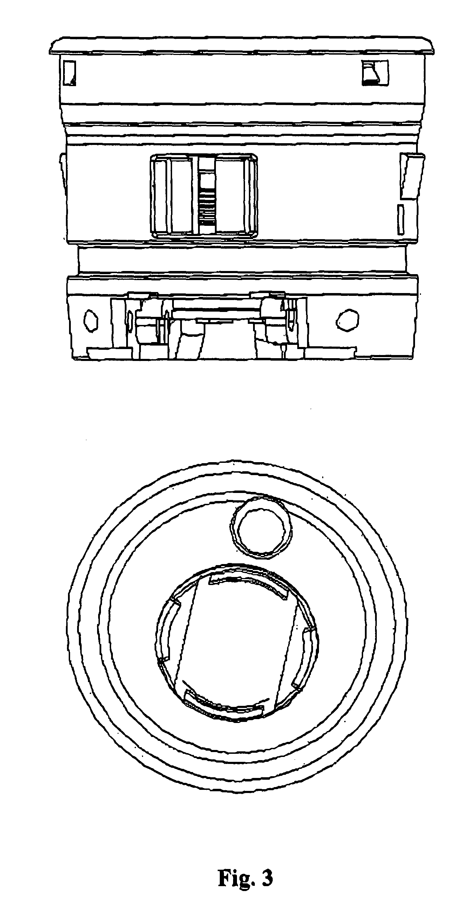

In the Fig 2, a fuel filler head is shown with the presented capless fuel system mounted. Nowadays, the above-mentioned retainer is mounted in the same position but with one big difference, actual systems need a cap to close the filler head entrance but as its own name says the capless system does not. In the Fig 3 the front and the top view of the capless fuel system completely assembled is shown, then after assembling the own capless system it would be mounted into the fuel filler.

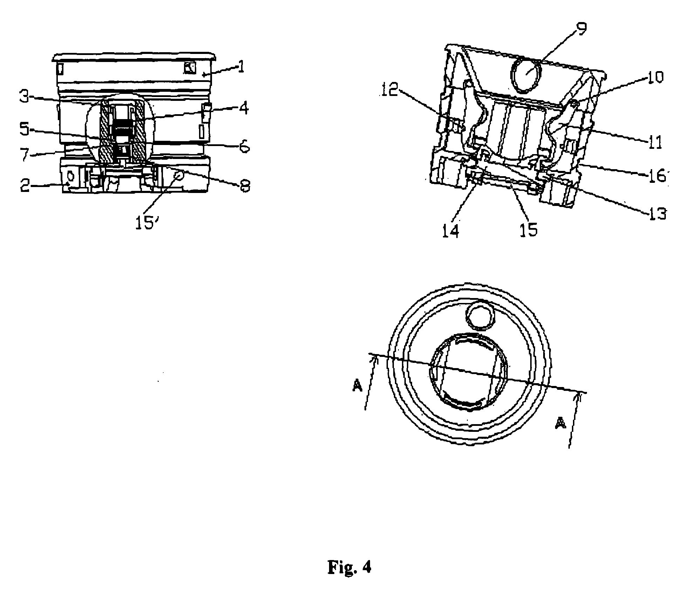

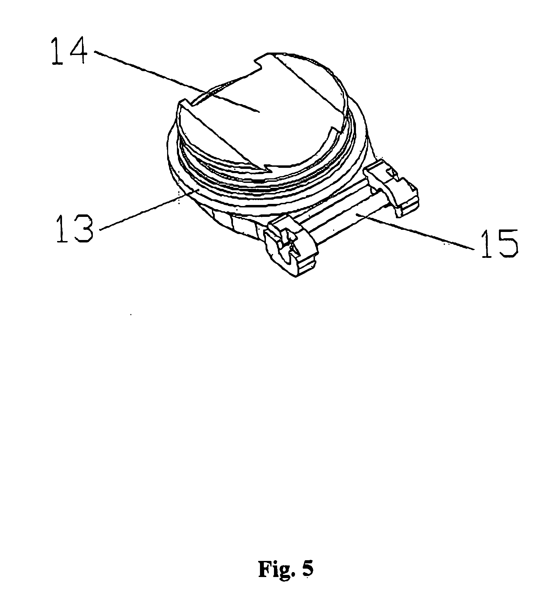

Fig 4 and Fig 5 show all components of the capless fuel system. They are numbered to facilitate the identification and the location in their assembly position.
o Number 1: Outer nozzle guide.
o Number 2: Main body.
o Safety valve parts (3,4, 5,6,7,8):
   ■ Number 3: Valve top cap.
   ■ Number 4: Emission spring.
   ■ Number 5: Spring guide.
   ■ Number 6: Valve joint.
   ■ Number 7: Valve bottom cap
   ■ Number 8: Admission spring.
o Number 9; Valve protector cap
o Locking system (10, 11, 12):
   ■ Number 10: Latch shaft.
   ■ Number 11: Latches.
   ■ Number 12: Elastic ring.
o Flapper door (13,14,15,15'):
   ■ Number 13: Sealing joint.
   ■ Number 14: Flapper door body
   ■ Number 15: Flapper door shaft.
   ■ Number 15': Shaft accommodation.
o Number 16: Metallic filler pipe joint.
o Number 16': Plastic filler pipe joint.

As shown in Fig (6) there are two methods of joining the present invention to fuel filler pipes. In the case of need to joint to a plastic filler pipe a plastic surface (16') is used as interface between the pipe and the capless fuel system.

In the other hand, if the filler pipe is metallic, only changing the above mentioned plastic surface into a rubber o-ring sited outside the main body (16) the sealing of the system will be done.

Using these two methods only two sealing interfaces are needed in the case of joint to a plastic filler pipe, the sealing joint (13) and the valve joint (6), and three in the case of metallic, the previous two plus the external o-ring (16).

### 6. Detailed description of the operating method of the present invention.

The functionality of this system will be explained in phases or by different functionalities in order to make easier the comprehension.

### 6.1 Refuelling using the suitable nozzle.

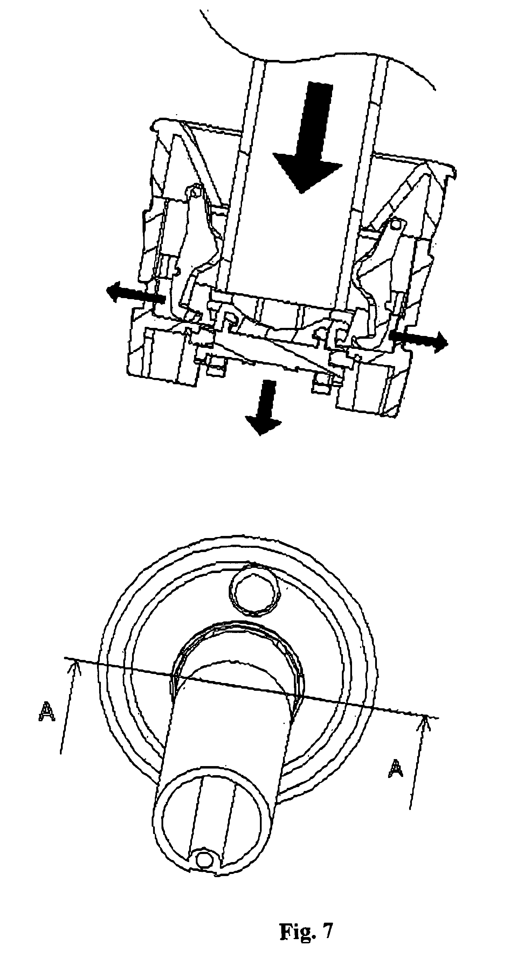

When the user or the attendant inserts the correct fuel nozzle into the capless fuel system, the extreme of the nozzle touchs on the latches (11) (see Fig 4 and 7) so the latches pivot around the shaft (10) releasing the flapper door (14) so its opening will be allowed.

When the nozzle pushes the flapper door (14) it will turns around its shaft (15) and will open allowing the refuelling.

### 6.2 Refuelling using an unintended nozzle.

The present capless fuel system has a locking system to prevent the insertion of unintended nozzles or strange objects. If the correct nozzle is not inserted, that is, if the user or the attendant is trying to insert the petrol nozzle is into diesel car and vice versa or an strange object is trying to be inserted, the locking system will not allow the flapper door opening so it will prevent their insertion.

The fuel nozzle have an standard size, a 21.5 mm approximately for petrol nozzles and 25.5 for diesel ones. So this erroneous situation could be summarized in two situations:

### 6.2.1 Using a smaller sized (smaller diameter) nozzle. (See Fig 7)

If the diameter of the object is smaller than the correct diameter, the object will not touch the latches (11) so the flapper door (14) will not be released so the object could not be inserted.

### 6.2.2 Using a larger sized nozzle. (See Fig 7)

If the diameter of the object is larger than the correct diameter, the object will touch the latches (11) so the flapper door (14) will be released but the diameter of the hole of the main body only allows the insertion of correct nozzles, that is, the diameter of the hole will be 22 mm for petrol cars and 26 for diesel ones, so larger objects could not be inserted.

### 6.3 Safety valve operating system.

The safety valve only works in two situations, when the pressure of the fuel tank drops or when the pressure of the fuel tank increases suddenly.

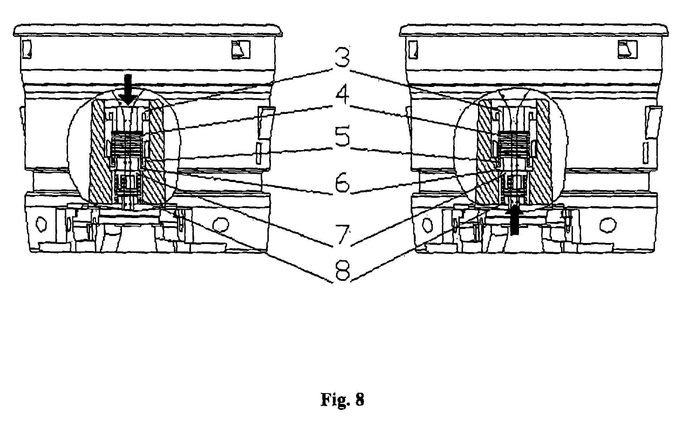

### 6.3.1 Taking air from outside. (See Fig 8)

When the pressure of the tank decreases the system needs to take air from outside to be balanced. When that happens is the safety valve which allows the air to go into the system.

As shown in Fig 8 the air will flow from the outside through the valve top cap (3) to valve bottom cap (7). The negative pressure of the tank will compress the admission spring (8) so the bottom cup (7) will go down and will allow to flow the air through the valve joint (6) into the fuel system.

### 6.3.2 Emitting fuel vapour to outside. (See Fig 8)

When the pressure of the tank increases the system needs to emit fuel vapour from inside to be balanced. When that happens is the safety valve which allows the fuel vapour to go out the system.

As shown in Fig 8 the fuel vapour will flow from the inside to the valve bottom cap (7). The positive pressure of the tank will compress the emission spring (4) and stretch the admission spring (8) so the bottom cup (7) will go up pushing the valve joint (6) and the spring guide (5). When that happens the valve joint (6) and the spring guide (5), both, goes into a hole with a larger diameter so the fuel vapour flow will be allowed, then the fuel vapour will go outside through the valve top cap (3).

## Claims

1. A capless fuel system for light trucks and passenger cars containing: a nozzle guide to facilitate the insertion of the fuel nozzle, a restriction system to avoid the insertion of unintended nozzles composed of at least two latches and a flapper door set, and a bidirectional valve to allow the emission or admission of vapours, which is suitable for applying in metallic or plastic tubes.

2. The invention as defined in claim 1 is the way of getting that features in one assembly and meeting all specifications.

3. The invention as defined in claim 2 is the most economically and simple way to obtain this system.

4. The invention as defined in claim 3 is the way to reduce the volume of the system to the minimum.

5. The invention as defined in claim 4 is the way wherein the minimum amount of parts are used to get the assembly.

6. The invention as defined in claim 1 provides the insertion of the fuel nozzle, even makes impossible to insert the fuel nozzle in a wrong way,

7. The invention as defined in claim 5 is the way to obtain a valve which moving in two directions is capable of doing two different services.

8. The invention as defined in claim 5 is the way to get a system which fits to metallic or plastic tubes (both options).

9. The invention as defined in claim 8 allows the refuelling in the following way: when the insertion of the fuel nozzle happens the restriction system is deactivated, the two latches pivote around their perpendicular axes so the flapper door set is unlocked. Opening the flapper door set the fuel nozzles can be inserted in the pipe.

10. The invention as defined in claim 7 has a component doing a double function, the valve operates as admission valve to compensate a sudden pressure dropping in the fuel tank and as safety valve and allows the emission of the fuel vapours when a sudden pressure increasing occurs in the fuel tank.

11. The invention as defined in claim 9 has two latches diametrically opposed and which axes and the axis of the valve form an angle of 90 degrees.

12. The invention as defined in claim 10 lets the movement of the latches in a perpendicular plane to a flapper door opening plane.

13. The invention as defined in claim 9 provokes the contact with the nozzle guide and makes easier its insertion.

14. The invention as defined in claim 12 has an elastic ring which moves the latches back and forth.

15. The invention as defined in claim 14 has an elastic ring which is sited around the pivoting latches.

16. The invention as defined in claim 10 reduces the risk of vapour emission because of the reduction of the number of the sealer surfaces, two in the case of using this capples fuel system in plastic pipes or three in the case or metallic ones.

17. The invention as defined in claim 10 which has a valve which operates under two different pressures, the lowest to admit air from outside and the highest and applied in reverse direction to emit fuel vapour in case of emergency.
